# EUROPEAN PATENT APPLICATION

(11) **EP 1 271 342 A1**
(43) Date of publication of application: **02.01.2003**
(21) Application number: 01110594.7
(22) Date of filing: 30.04.2001
(51) Int. Cl.: G06F 17/30

(54) **Method for accessing database table columns**

(71) Applicant: Sun Microsystems, Inc., Santa Clara, California 95054 (US)
(72) Inventor: Janssen, Ocke, 20255 Hamburg (DE)
(74) Representative: Betten & Resch

(57) **Abstract**

There is provided a method for accessing columns of a database table, said method comprising: determining the data type in which the data of this column is stored; accessing said column to read out data from said column in said type in which it is stored in said column; converting said data from said type in which it was stored in said database table into a second type, and outputting said converted data.

## Description

### FIELD OF THE INVENTION

The present invention relates to relational databases, an in particular it relates to the access to data stored in columns of database tables.

### BACKGROUND OF THE INVENTION

Relational databases are a common tool for storing, administrating and querying data in an ordered form. In a relational database data are stored in columns and rows, one row typically forming an individual dataset or data record.

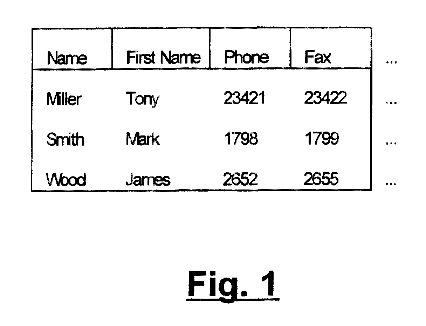

Assuming that a database stores data of persons, then a first column may contain the surname, a second column the first name, a third column the phone number, a fourth column the fax number, and so on. Fig. 1 exemplarily shows such a database table.

The content of such tables can be queried, e.g. by means of the so-called structured query language SQL which has become kind of a standard for querying databases. Using SQL commands one can e.g., look for people whose name starts with a "P" and who have a phone number ending with "1".

However, the database tables themselves have to be carefully generated in order to allow for the integration of any possible future needs of a user. Defining database tables essentially means defining database columns, because each column contains data of the same type (such as integer, boolean, or the like). A table therefore essentially consists of the sum of the definition of its columns. It should be noted that the "data type" is different from the "data format". While the data type defines the manner in which the data actually is stored, the format relates to the manner in which the data is displayed, e.g. a date may be displayed as "yy/mm/dd" or in the form "month day year", etcetera.

The data which together define the properties of a database table (which may also be called "metadata") essentially define and to some extent also limit the capabilities of the database, therefore the design of the database tables should be seriously contemplated. In particular types of columns once selected or defined can not be changed easily (typically they cannot be changed at all anymore), and therefore designing a database which foresees future needs is by no means an easy task.

The individual data stored in the database tables is managed and accessed by programs called drivers, they provide the basic functions to access table data such as the reading and the storing of individual data, columns, rows, etcetera.

For accessing the data of individual columns database drivers typically provide methods which are customized to fetch data stored according to a certain data type. As mentioned before, each column contains data stored in the same type, and in order to read out this data there must be provided a method which is suitable for the particular data type in which the data is stored. Data types could e.g. be of the type boolean, integer, varchar, float, double, etcetera.

It is clear that for each column data the driver must offer the user a suitable method for accessing the data, whereas "suitable" here means that the type for which the driver is designed must match the data type according to which the column data is stored in the table. The access of column data therefore is limited in the sense that the format in which the column data is stored not only defines the method for fetching it but also defines the format in which the data is outputted.

It is an object of the present invention to provide a more flexible method for accessing the column data of database tables.

### SUMMARY OF THE INVENTION

According to an embodiment of the present invention there is provided a method for accessing column data of database tables which accesses the data in the type in which they are stored in a column, but which then further provides the possibility to change the data type before outputting the column data.

This greatly improves the flexibility of the data handling of column data of database tables. It opens the possibility to deliver column data in a certain type which is different from the type in which the data is internally stored.

According to a further embodiment a user is provided with a plurality of conversion options which makes it easy and convenient for a user to select the output type which he desires.

Embodiments of the invention can either be implemented in software or in hardware, any hybrid solutions where a part or parts are implemented in software and other parts are implemented in hardware are possible as well. The embodiments of the invention may also be implemented in the form of a computer program product which comprises computer executable instructions embodied in any medium suitable for storing or transmitting such instructions.

### BRIEF DESCRIPTION OF THE DRAWINGS

Fig. 1 schematically illustrates an example of a table of a relational database.
Fig. 2 schematically illustrates a flowchart according to an embodiment of the invention.
Fig. 3 schematically illustrates a flowchart according to a further embodiment of the invention.
Fig. 4 schematically illustrates a flowchart according to a yet further embodiment of the invention.
Fig. 5 schematically illustrates a flowchart according to an even further embodiment of the invention.
Figure 6A schematically illustrates a computer system which can be used in connection with an embodiment of the present invention.
Figure 6B illustrates a computer system which can be used in connection with the present invention.

### DETAILED DESCRIPTION

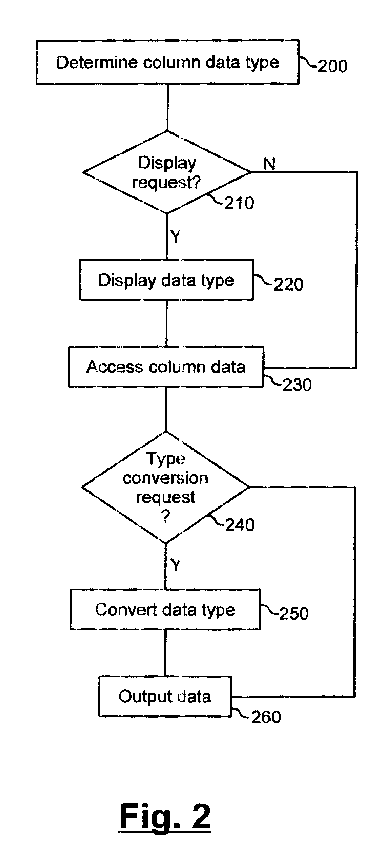

A first embodiment of the present invention will now be explained in connection with Fig. 2. Assume that data in a certain column of a database table has to be accessed, e.g. in response to a query command. The access then is carried out by reading the data out from the storage location where they are stored into variables which - according to their type definition - are suitable to store the read out data values.
For such readout operations there exist methods well known to the person skilled in the art which are specific for the type of data to be read out. A boolean data type e.g. can be accessed by a method called "getbool", an integer type column data can be accessed by a method called "getint", and the like. Those methods and their usage are well known to the persons skilled in the art and will not be explained in any further detail herein. It should, however, be noted that the access methods available are specific for the respective data type in which the data are stored in a database table column.

Therefore, at first the type of the data to be fetched has to be determined. This is e.g. done by reading the column metadata in operation 200. In operation 210 a user may request the data type to be displayed which then is displayed in operation 220. This could e.g. be done by a corresponding request in the context menu.

Based on the thus determined data type the column data can be accessed using an access method suitable for the determined type provided by the database driver in operation 230. Such kind of methods are provided by any database drivers which are components of commercially available database management software. For each column type there exists a corresponding method to access or to fetch the data of this column, as it is known by any skilled person familiar with database technology.

In operation 240 it is then checked whether a type conversion has been requested by the user. If so, the data is then converted into a different data type in operation 250, and the thus converted data can then be outputted in operation 260. The data type conversion itself is a standard procedure used in information processing, its exact implementation may depend on the particular source type which is to be converted and the target type into which the source type is to be converted, it is, however, straightforward to implement for anybody skilled in the art. Conversions like the conversion of integer values into strings or any other conversion of variable types from one type into another belong to the standard knowledge of each programmer and therefore are not explained in detail herein.

The outputting operation 260 may output the converted data to the screen, e.g. as a display of some query result, it may, however, as well output the data to any other program or program component. This could e.g. a spreadsheet program into which the output is to be imported, it could also be a query result table which itself again could be subject to a database query, or the like.

It should be noted here that the manner in which the data is stored in the column of a database table is not changed, what is changed rather is the manner of accessing or fetching the data.

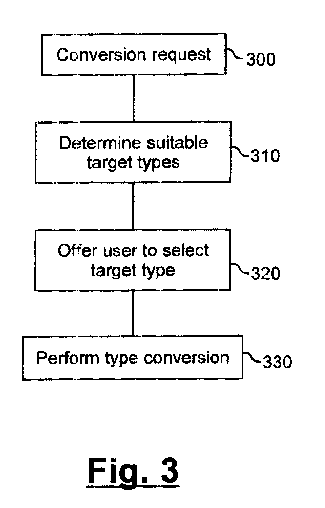

A particular embodiment of the present invention will now be explained in connection with Fig. 3. After a conversion request has been issued by the user in operation 300, it is determined which target types should be considered for converting the source type. This is kind of a plausibility check, e.g. it usually make not much sense to convert a double precision floating point variable into the type boolean. Therefore, in the plausibility check operation 310 those types which seem to be useful or meaningful for a given source type are checked (e.g. by a lookup table) and are then in operation 320 offered to the user as conversion options.

Based on the user selection in operation 330 then the type conversion is performed.

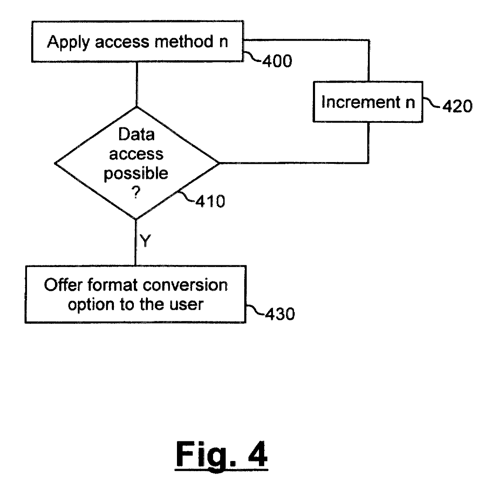

A further particular embodiment will now be explained in connection with Fig. 4. It may happen that the column properties with respect to the data type used for storing the column data are internally different than they seem to be to the outside world. A column may appear to be of the type boolean, but internally a boolean "true" may be stored as integer value "0" while a boolean "false" may be stored internally as an integer value "-1". In this case it is of course not possible to access the column data by a method suitable for the type "boolean", rather it is required to access the column data by a method suitable for accessing integer data.

Such kind of inconsistencies may occur in any database program, they may have been introduced due to some kind of lazy design as "bugs" or they may have been implemented purportedly for some reason. In such a case, however, a user cannot determine the type of the column data by reading the metadata, at least he cannot be sure that what he gets as data type from reading the metadata actually is the data type in which the column data is stored.

A user would therefore at first have to determine the data type of the stored data, e.g. by trying different access methods for different data types (e.g. boolean, integer, etcetera), to determine the data type. Then the user could employ the thus found access method to access the column data and can further convert the data as desired in the manner explained before.

In operation 400 a first access method is tried, in operation 410 it is checked whether it has delivered a meaningful output, e.g. by checking the content of the data which was read out. If the method did not deliver a meaningful output (the read out data makes no sense or an error message occurred), then the next available method is tried (operations 420 and 400), until there is delivered a meaningful output. Then the type of the column data must be in conformity with the used access method, and therefore the data type thus has been determined. The method then may proceed in operation 430 with in the manner as already described in connection with the embodiments described before.

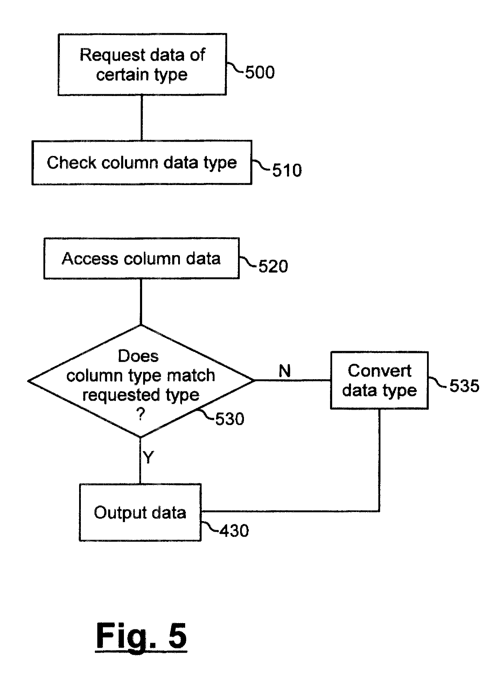

The embodiments described herein so far are particularly useful if a user wishes the data to be in a certain type when being outputted. However, it may as well be possible that the request comes from an application program or a program component which requires column data to be in a certain type which not necessarily coincides with the type in which it is stored. This is schematically illustrated in Fig. 5. An application program may request some data from a database table in operation 500. As already explained before, the type of the data column to be accessed is determined in operation 510. In operation 520 the column data is then accessed based on the detected data type. In operation 530 it is then determined whether the requested data type and the column type match. If so, then in operation 540 the column data is outputted in operation in a normal manner.
If in operation 530 it has been detected that the data types do not match, then in operation 535 a data type conversion is carried out so that in operation 540 an output in the desired data type can be carried out.

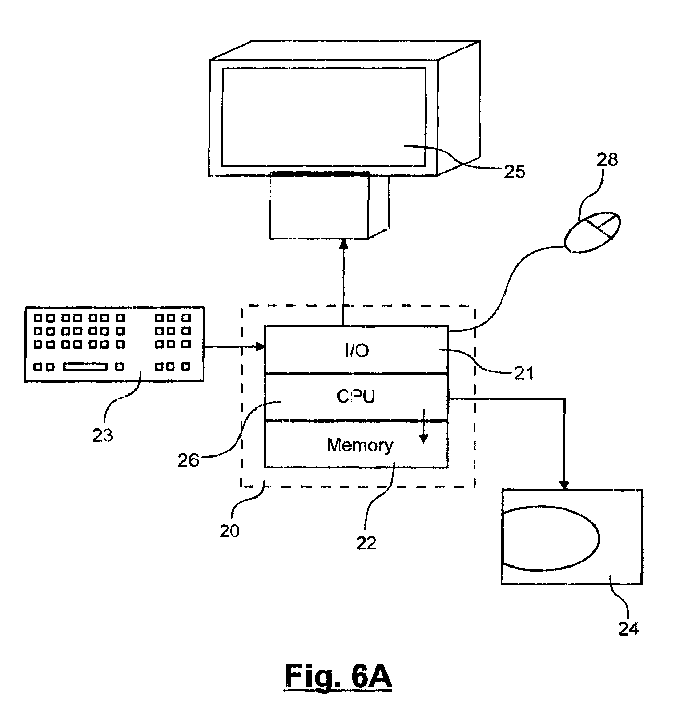

The present invention is applicable to a hardware configuration like a personal computer or a work station as illustrated schematically in Figure 6A. The computer may comprise a central processing unit CPU 26, an input output I/O unit 21, an internal memory 22 and an external memory 24. The computer may further comprise standard input devices like a keyboard 23, a mouse 28 or a speech processing means (not illustrated).

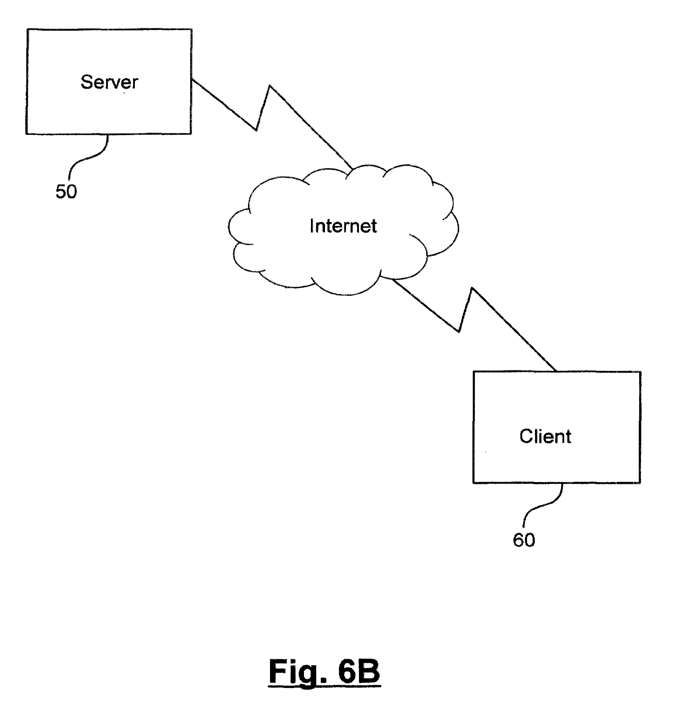

The invention, however, may also be applied to a client-server configuration as illustrated in Figure 6B. The data to be accessed may be displayed on a display screen of a client device 60 while some or all operations of the method as illustrated before in connection with Figures 1 to 5 are carried out on one or more server computer accessible by a client device over a data network such as the internet using a browser application or the like.

While the invention has been particularly shown with the reference to embodiments thereof, it will be understood by those skilled in the art that various other changes in the form and details may be made therein without departing from the spirit and scope of the invention. For example, the context menu not only could be used to display the type of a selected table column but also the possible target types into which the source type could be converted.

## Claims

1. A method for accessing columns of a database table, said method comprising:
determining the data type in which the data of this column is stored;
accessing said column to read out data from said column in said type in which it is stored in said column;
converting said data from said type in which it was stored in said database table into a second type, and
outputting said converted data.

2. The method of claim 1, further comprising:
displaying the type of said column data to the user in response to a corresponding display request.

3. The method of claim 2, wherein said displaying of said column type is carried out in response to an option provided by the context menu.

4. The method of one of claims 1 to 3, further comprising:
determining suitable target data types based on the determined source data type;
offering to the user said target types as options for selection; and
receiving a user selection for selecting among said plurality of options the format into which the source format is to be converted.

5. The method of one of claims 1 to 4, wherein said method further comprises:
receiving a request for said source column data, said request requiring said column data to be of a certain type;
checking whether said source column data type matches said required type;
if no match is detected, then carrying out a type conversion to convert the source data type into the required data type.

6. The method of one of claims 1 to 5, wherein said access to said column data is requested by an application program.

7. A software tool for accessing columns of a database table, said software tool comprising:
a software module for determining the data type in which the data of this column is stored;
a software module for accessing said column to read out data from said column in said type in which it is stored in said column;
a software module for converting said data from said type in which it was stored in said database table into a second type, and
a software module for outputting said converted data.

8. The software tool of claim 7, further comprising:
a software module for displaying the type of said column data to the user in response to a corresponding display request.

9. The software tool of claim 8, wherein said displaying of said column type is carried out in response to an option provided by the context menu.

10. The software tool of one of claims 7 to 9, further comprising:
a software module for determining suitable target data types based on the determined source data type;
a software module for offering to the user said target types as options for selection; and
a software module for receiving a user selection for selecting among said plurality of options the format into which the source format is to be converted.

11. The software tool of one of claims 7 to 10, further comprising:
a software module for receiving a request for said source column data, said request requiring said column data to be of a certain type;
a software module for checking whether said source column data type matches said required type, and, if no match is detected, then for carrying out a type conversion to convert the source data type into the required data type.

12. The software module of one of claims 7 to 11, wherein said access to said column data is requested by an application program.

13. A computer program product for accessing columns of a database table, said computer program product comprising computer executable program code embodied in a medium for storing and/or transmitting said instructions, said program code comprising:
a computer program code portion for determining the data type in which the data of this column is stored;
a computer program code portion for accessing said column to read out data from said column in said type in which it is stored in said column;
a computer program code portion for converting said data from said type in which it was stored in said database table into a second type, and
a computer program code portion for outputting said converted data.

14. An apparatus for accessing columns of a database table, said apparatus comprising:
means for determining the data type in which the data of this column is stored;
means for accessing said column to read out data from said column in said type in which it is stored in said column;
means for converting said data from said type in which it was stored in said database table into a second type, and
means for outputting said converted data.
